# EUROPÄISCHE PATENTSCHRIFT

(11) **EP 1 496 714 B1**
(45) Veröffentlichungstag und Bekanntmachung des Hinweises auf die Patenterteilung: **01.02.2006**
(21) Anmeldenummer: 03405523.6
(22) Anmeldetag: 10.07.2003
(51) Int. Cl.: H04Q 7/32, H04B 1/38

(54) **Elektronische Weiche für Kommunikationsendgeräte mit mehreren Chipkarten, und Kommunikationsverfahren**
Electronic switch for communication terminals with multiple SIM cards, and a communication method
Aiguillage électronique pour terminaux de communication avec plusieurs cartes SIM, et un procédé de communication

(43) Veröffentlichungstag der Anmeldung: 12.01.2005
(73) Patentinhaber: Swisscom Mobile AG, 3050 Bern (CH)
(72) Erfinder: Baessler, Félix, 3014 Bern (CH)
(74) Vertreter: BOVARD AG

(56) Entgegenhaltungen:
- EP-A- 1 058 467
- DE-A- 19 816 575
- US-A- 5 887 266
- US-A1- 2002 016 186
- US-B1- 6 557 753

## Beschreibung

### Technisches Gebiet

Die vorliegende Erfindung betrifft eine elektronische Weiche für Kommunikationsendgeräte, ein Kommunikationsendgerät und ein Kommunikationsverfahren. Die vorliegende Erfindung betrifft insbesondere eine elektronische Weiche, die mindestens zwei Aufnahmemodule zur Aufnahme einer ersten und einer zweiten Chipkarte umfasst und die mit einem Kommunikationsendgerät verbindbar ist über eine Modulschnittstelle, welche für die Verbindung mit Teilnehmeridentifizierungsmodulen vorgesehen ist. Die vorliegende Erfindung betrifft insbesondere auch ein Kommunikationsendgerät, das ein Kommunikationsmodul mit einer Modulschnittstelle für die Kommunikation mit einem Teilnehmeridentifizierungsmodul und mindestens zwei Aufnahmemodule zur Aufnahme einer ersten und einer zweiten Chipkarte umfasst. Die vorliegende Erfindung betrifft schliesslich auch ein Kommunikationsverfahren für die Kommunikation zwischen einem Kommunikationsendgerät und mindestens zwei Chipkarten, wobei das Kommunikationsendgerät über eine Modulschnittstelle für die Verbindung mit Teilnehmeridentifizierungsmodulen verfügt.

### Stand der Technik

Kommunikationsendgeräte, insbesondere mobile Kommunikationsendgeräte wie Mobilfunktelefone, sind mit Teilnehmeridentifizierungsmodulen versehen, die zur Teilnehmeridentifizierung und Authentifizierung in Mobilfunknetzen dienen. Typischerweise sind die Teilnehmeridentifizierungsmodule als Chipkarten ausgeführt, die als SIM-Karten (Subscriber Identity Module) bekannt sind. Die Teilnehmeridentifizierungsmodule werden in dafür vorgesehenen Aufnahmemodulen aufgenommen und über spezielle Modulschnittstellen entfernbar mit dem Kommunikationsendgerät verbunden. Eine solche Modulschnittstelle für die Kommunikation zwischen einem mobilen Kommunikationsendgerät und einem Teilhehmeridentifizierungsmodul wurde beispielsweise vom Euröpean Telecommunication Standards Institute (ETSI) für das GSM-Mobilfunknetz (Global System for Mobile Communications) in der technischen Norm GSM 11.11 definiert. SIM-Karten können neben den für die Teilnehmeridentifizierung und Authentifizierung verwendeten Daten und Funktionen auch Softwareprogramme umfassen, so genannte STK-Applets (SIM Tool Kit). Die STK-Applets verfügen über eine Schnittstelle zum Kommunikationsmodul des Kommunikationsendgeräts und können spezielle Funktionen wie Rufnummern wählen, SMS-Kurzmeldungen versenden (Short Message Services) ausführen. Die STK-Applets verfügen auch über Benutzerschnittstellen, welche vom Teilnehmer über die Anzeige und die Tastatur des Kommunikationsendgeräts bedienbar sind.

Es sind auch Kommunikationsendgeräte bekannt, die mit zwei Aufnahmemodulen versehen sind, um gleichzeitig zwei SIM-Karten aufzunehmen. Mittels manueller Befehlseingabe, beispielsweise beim Aufstarten des Kommunikationsendgeräts, oder durch Betätigen eines Schalters, wird selektiv jeweils eine der beiden SIM-Karten aktiviert. Durch Umschalten der aktiven SIM-Karte kann dem Kommunikationsendgerät beispielsweise eine alternative Rufnummer zugewiesen werden, welche der Teilnehmeridentifizierung zugeordnet ist, die auf der aktiven SIM-Karte gespeichert ist. In der Regel kann jedoch jeweils nur eine SIM-Karte aktiv sein und nach dem Aktivieren einer anderen SIM-Karte muss das Kommunikationsendgerät jeweils neu aufgestartet werden.

In der Patentschrift US 5,875,404 wird ein Mobilfunktelefon beschrieben, das eine zweite SIM-Karte aufnehmen kann, welche zusätzlich zu den Teilnehmeridentifizierungsfunktionen spezielle Beantwortungsdienste und Kurzmeldungsdienste ausführen kann. Beim Einführen der zweiten SIM-Karte wird die erste SIM-Karte allerdings deaktiviert.

In der Patentschrift US 5,764,730 wird ein Mobilfunktelefon beschrieben, das mehrere SIM-Karten aufnehmen kann, die so lange gleichzeitig aktiviert sein können, bis ein Anruf für eine der auf den SIM-Karten gespeicherten Teilnehmeridentifizierungen ankommt, worauf alle nicht betroffenen Teilnehmeridentifizierungen für die Dauer dieses Anrufs deaktiviert und deregistriert werden.

Gemäss der Patentanmeldung US2002/0154632 wird in einem Mobilfunktelefon auf Grund empfangener Identifizieruhgscodes zwischen verschiedenen SIM-Karten umgeschaltet.

Gemäss der Patentanmeldung WO 01/33880 werden SIM-Karten in einem Mobilfunktelefon automatisch gemäss definierten Zeitplänen umgeschaltet.

In der Patentanmeldung DE 198 16 575 wird eine Karte zum endgerätseitigen Ausführen mindestens eines auf eine Spezialapplikation bezogenen Vorgangs beschrieben, wobei der Vorgang in einer Mobilfunk-Teilnehmer-Identifizierungskarte als Programm abläuft. Ein Programmmodul trennt die auf die Spezialapplikation bezogenen Kurznachrichten von anderen Kurznachrichten und leitet die auf die Spezialapplikation bezogenen Kurznachrichten an die Spezialapplikation weiter. Die Spezialapplikation kann über vorhandene Standard-Teilfunktionen sowohl auf geräteseitige Funktionen des Mobilfunk-Telefons zugreifen als auch Kurznachrichten über das Mobilfunknetz senden.

In der Patentanmeldung US 2002/0016186 wird ein Standard-Mobilfunk-Telefon beschrieben, welches neben einer Schnittstelle für die Aufnahme einer Teilnehmer-Identifizierungskarte eine weitere Schnittstelle für die Aufnahme einer weiteren Chipkarte umfasst. Um eine direkte Kommunikation zwischen der weiteren Chipkarte und dem Standard-Mobilfunk-Telefon zu ermöglichen, wird vorgeschlagen, einen Mikroprozessor für die Handhabung dieser direkten Kommunikation hinzuzufügen sowie ein entsprechendes Programmmodul auf der Teilnehmer-Identifizierungskarte oder im Standard-Mobilfunk-Telefon zu installieren.

Kommunikationsendgeräte werden auch mit zusätzlichen Aufnahmemodulen versehen, um weitere Chipkarten mit dem Kommunikationsendgerät zu verbinden, die nicht die Funktionalität eines Teilnehmeridentifizierungsmoduls aufweisen, sondern für andere, von der SIM-Karte unabhängige Anwendungen ausgelegt sind, insbesondere für Finanztransaktionen. In der Patentanmeldung WO 97/05729 wird beispielsweise ein Mobilfunktelefon beschrieben, das mit einem Kartenlesegerät für so genannte Pre-Paid-Karten ausgestattet ist, welche jeweils mit einem gespeicherten Geldbetrag zur Bezahlung von Telekommunikationsdiensten versehen sind.

Um die Vertraulichkeit der auf den SIM-Karten gespeicherten Daten, die für die Teilnehmeridentifizierung und Authentifizierung verwendet werden, zu schützen, werden die SIM-Karten typischerweise von den Betreibern der Mobilfunknetze kontrolliert. Allerdings unterliegen auch andere, nicht netzwerkspezifische Anwendungen, wie beispielsweise Finanztransaktionsanwendungen, grossen Vertraulichkeits- und Sicherheitsanforderungen, die nicht von den Netzbetreibern sondern von den betreffenden Anwendungsanbietern kontrolliert werden sollten. Die Lösungen des Stands der Technik ermöglichen keine vollständig getrennte Kontrolle der netzwerkspezifischen Sicherheitsaspekte von anwendungsspezifischen Sicherheitsaspekten auf SIM-Karten. Um eine vollständig getrennte Kontrolle über nicht netzwerkspezifische Anwendungen zu ermöglichen, müssen diese Anwendungen im Stand der Technik auf Zusatzkarten ausgeführt werden, die über dafür vorgesehene Aufnahmemodule mit den Kommunikationsendgeräten verbunden werden. Allerdings sind die auf von der SIM-Karte unabhängigen Zusatzkarten ausgeführten Anwendungen jeweils auf die Interaktion mit dem verbundenen Kommunikationsendgerät beschränkt, ein direkter Datenaustausch zwischen SIM-Karte und Zusatzkarte ist beispielsweise nicht möglich.

### Darstellung der Erfindung

Es ist eine Aufgabe der vorliegenden Erfindung, neue Vorrichtungen und ein neues Verfahren vorzuschlagen, welche die Kommunikation zwischen einem Kommunikationsendgerät und mindestens zwei Chipkarten ermöglichen und welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die elektronische Weiche ist vorgesehen für Kommunikationsendgeräte, die über eine Modulschnittstelle zur Verbindung mit Teilnehmeridentifizierungsmodulen verfügen, und umfasst eine Schnittstelle zur Verbindung mit dieser Modulschnittstelle des Kommunikationsendgeräts, ein erstes Aufnahmemodul zur Aufnahme einer ersten Chipkarte und mindestens ein zweites Aufnahmemodul zur Aufnahme einer zweiten Chipkarte. Über die Modulschnittstelle kann die elektronische Weiche an Stelle einer SIM-Karte mit dem Kommunikationsendgerät verbunden werden, wodurch das Kommunikationsendgerät für die Aufnahme von mindestens zwei Chipkarten erweitert wird.

Die oben genannten Ziele werden durch die vorliegende Erfindung insbesondere dadurch erreicht, dass die elektronische Weiche ein Protokollanalysermodul umfasst zur Ermittlung eines Instruktionstyps aus einer über die Modulschnittstelle empfangenen Protokolldateneinheit vom Kommunikationsendgerät, und dass die elektronische Weiche ein Steuermodul umfasst zum Übermitteln von Protokolldateneinheiten in Abhängigkeit des ermittelten Instruktionstyps an die erste Chipkarte und/oder an die zweite Chipkarte. In der elektronischen Weiche werden Protokolldateneinheiten empfangen, die vom Kommunikationsendgerät zur Übermittlung an ein Teilnehmeridentifizierungsmodul, insbesondere an eine SIM-Karte, über die Mödulsthnittstelle geleitet werden. Die elektronische Weiche ermittelt jeweils den Instruktionstyp einer empfangenen Protokolldateneinheit und übermittelt in Abhängigkeit des ermittelten Instruktionstyps eine oder mehrere Protokolldateneinheiten an die erste der Chipkarten, die sich im ersten Aufnahmemodul befindet, und/oder an die zweite der Chipkarten, die sich im zweiten Aufnahmemodul befindet. Die elektronische Weiche ermöglicht so, dass das standardisierte Applikationsprotokoll, das für die Interaktion zwischen dem Kommunikationsendgerät und dem Teilnehmeridentifizierungsmodul definiert ist, zwischen dem Kommunikationsendgerät und mehreren Chipkarten ausgeführt werden kann, ohne dass dies auf der Seite des Kommunikationsendgeräts bemerkbar ist und ohne dass dazu irgendwelche Änderungen am Kommunikationsendgerät selber vorgenommen werden müssen. Die elektronische Weiche ermöglicht es, die definierten Applikationsfunktionen eines Teilnehmeridentifizierungsmoduls, die vom Kommunikationsendgerät durch Übermitteln entsprechender Applikationsprotokolldateneinheiten über die Modulschnittstelle initiiert werden, auf mehrere Chipkarten zu verteilen. Es ist insbesondere möglich, sicherheitsrelevante Funktionen, die von einem Netzbetreiber kontrolliert werden sollen, auf der ersten Chipkarte zu implementieren, die beispielsweise als Netzkarte bezeichnet wird, und andere Funktionen, die nicht vom Netzbetreiber kontrolliert werden müssen, auf der zweiten Chipkarte zu implementieren, die beispielsweise als Anwendungskarte bezeichnet wird. Auf Grund des bestimmten Instruktionstyps übermittelt die elektronische Weiche Protokolldateneinheiten an die Netzkarte, an die Anwendungskarte oder an beide Chipkarten.

In einer Ausführungsvariante umfasst die elektronische Weiche einen Konfigurationsspeicher zum Speichern von Konfigurationsdaten, welche Konfigurationsdaten Angaben über die Funktionalität der ersten Chipkarte und die Funktionalität der zweiten Chipkarte umfassen, und das Steuermodul ist eingerichtet zum Übermitteln von Protokolldateneinheiten in Abhängigkeit der gespeicherten Konfigurationsdaten an die erste Chipkarte oder an die zweite Chipkarte. Der Konfigurationsspeicher ermöglicht es, die elektronische Weiche flexibel und einfach an unterschiedlich konfigurierte Chipkarten anzupassen, die mit verschiedenen Applikationstunktionen versehen sind. Auf Grund des ermittelten Instruktionstyps einer empfangenen Applikationsprotokolldateneinheit und auf Grund der gespeicherten Konfigurationsdaten, die die Zuordnung von Applikationsfunktionen zu den Chipkarten angeben, bestimmt die elektronische Weiche, welche Protokolldateneinheiten an welche Chipkarte übermittelt werden müssen und, falls mehrere Protokolldateneinheiten übermittelt werden müssen, in welcher Reihenfolge sie übermittelt werden müssen.

Vorzugsweise ist das Steuermodul zudem eingerichtet zum Übermitteln von Protokolldateneinheiten an die erste Chipkarte in Abhängigkeit einer von der zweiten Chipkarte empfangenen Protokolldateneinheit. Durch die Übermittlung von Protokolldateneinheiten an die erste Chipkarte in Abhängigkeit einer Protokolldateneinheit von der zweiten Chipkarte, ermöglicht die elektronische Weiche den direkten Datenaustausch zwischen den Chipkarten, die mit der elektronischen Weiche verbunden sind, ohne dass das Kommunikationsendgerät dazu involviert werden muss.

In einer Ausführungsvariante umfasst die elektronische Weiche einen Zustandsspeicher zum Speichern von Zustandswerten und das Steuermodul ist eingerichtet zum Übermitteln von Protokolldateneinheiten in Abhängigkeit der gespeicherten Zustandswerte an die erste Chipkarte, an die zweite Chipkarte oder an das Kommunikationsendgerät. Dazu umfasst die elektronische Weiche zudem vorzugsweise ein Zustandskontrollmodul zum Speichern von Zustandswerten abhängig vom Instruktionstyp einer Protokolldateneinheit, die vom Kommunikationsendgerät empfangen wurde, abhängig von einer Protokolldateneinheit, die von der ersten Chipkarte oder von der zweiten Chipkarte empfangen wurde, und/oder abhängig davon, ob die Protokolldateneinheit von der ersten Chipkarte, von der zweiten Chipkarte oder vom Kommunikationsendgerät empfangen wurde. Durch das Speichern von Zustandswerten können nicht nur vom Kommunikätionsendgerät gleichzeitig mehrere unterschiedliche Funktionen der Chipkarten initiiert werden, sondern es können vom Kommunikationsendgerät oder von den Chipkarten mehrere möglicherweise gleiche Funktionen der Chipkarten initiiert werden. Zudem können dadurch auch mehrstufige und verschachtelte Funktionen initiiert und abgewickelt werden. Insbesondere für diesen Zweck umfasst die elektronische Weiche vorzugsweise einen Meldungsspeicher zum Speichern von empfangenen Protokolldateneinheiten und das Steuermodul ist eingerichtet zum Übermitteln von Protokolldateneinheiten an das Kommunikationsendgerät in Abhängigkeit von gespeicherten Protokolldateneinheiten, die von der ersten Chipkarte und/oder von der zweiten Chipkarte empfangen wurden. Dadurch wird ermöglicht, dass zum Beispiel auf Grund einer einzigen Instruktion, die in der elektronischen Weiche mittels einer Protokolldateneinheit vom Kommunikationsendgerät empfangen wurde, mehrere Protokolldateneinheiten mit Instruktionen nacheinander an eine oder mehrere der Chipkarten übermittelt werden und von der elektronische Weiche mehrere Antworten der Chipkarten gesammelt und in einer einzigen Antwort mittels einer Protokolldateneinheit an das Kommunikationsendgerät übermittelt werden.

Anstatt ein Kommunikationsendgerät mit der oben beschriebenen separaten elektronischen Weiche zu verbinden, kann in einer alternativen Ausgestaltung ein Kommunikationsendgerät, das ein Kommunikationsmodul mit einer Modulschnittstelle zur Kommunikation mit einem Teilnehmeridentifizierungsmodul, ein erstes Aufnahmemodul zur Aufnahme einer ersten Chipkarte und mindestens ein zweites Aufnahmemodul zur Aufnahme einer zweiten Chipkarte umfasst, fest mit den funktionalen Modulen für die erweiterte Funktionalität der elektronischen Weiche versehen werden. Das heisst, ein Protokollanalysemodul zur Ermittlung eines Instruktionstyps aus einer über die Modulschnittstelle empfangenen Protokolldateneinheit vom Kommunikationsmodul und ein Steuermodul zum Übermitteln von Protokolldateneinheiten in Abhängigkeit des ermittelten Instruktionstyps an die erste Chipkarte und/oder an die zweite Chipkarte wird fest in das Kommunikationsendgerät eingebaut. In weiteren Ausführungsvarianten werden auch die oben beschriebenen Konfigurationsspeicher, Zustandsspeicher und Meldungsspeicher direkt im Kommunika= tionsendgerät ausgeführt. Schliesslich wird das Kommunikationsendgerät in einer Ausführungsvariante auch mit einem Zustandskontrollmodul versehen zum Speichern von Zustandswerten, abhängig vom Instruktionstyp einer Protokolldateneinheit, die vom Kommunikationsendgerät empfangen wurde, abhängig von einer Protokolldateneinheit, die von der ersten Chipkarte oder von der zweiten Chipkarte empfangen wurde, und/oder abhängig davon, ob die Protokolldateneinheit von der ersten Chipkarte, von der zweiten Chipkarte oder vom Kommunikationsendgerät empfangen wurde.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine elektronische Weiche zeigt, die eine Schnittstelle zur Verbindung mit einem Kommunikationsendgerät, zwei Aufnahmemodule zur Aufnahme von zwei Chipkarten sowie ein Weichenmodul mit mehreren funktionalen Modulen umfasst.
Figur 2 zeigt ein Blockdiagramm, welches schematisch ein Kommunikationsendgerät zeigt, das eine Modulschnittstelle zur Verbindung mit einem Teilnehmeridentifizierungsmodul, zwei Aufnahmemodule zur Aufnahme von zwei Chipkarten sowie ein Weichenmodul mit mehreren funktionalen Modulen umfasst.
Figur 3 zeigt ein Zustandsdiagramm, welches schematisch verschiedene mögliche Zustände des Weichenmoduls zeigt.

### Wege zur Ausführung der Erfindung

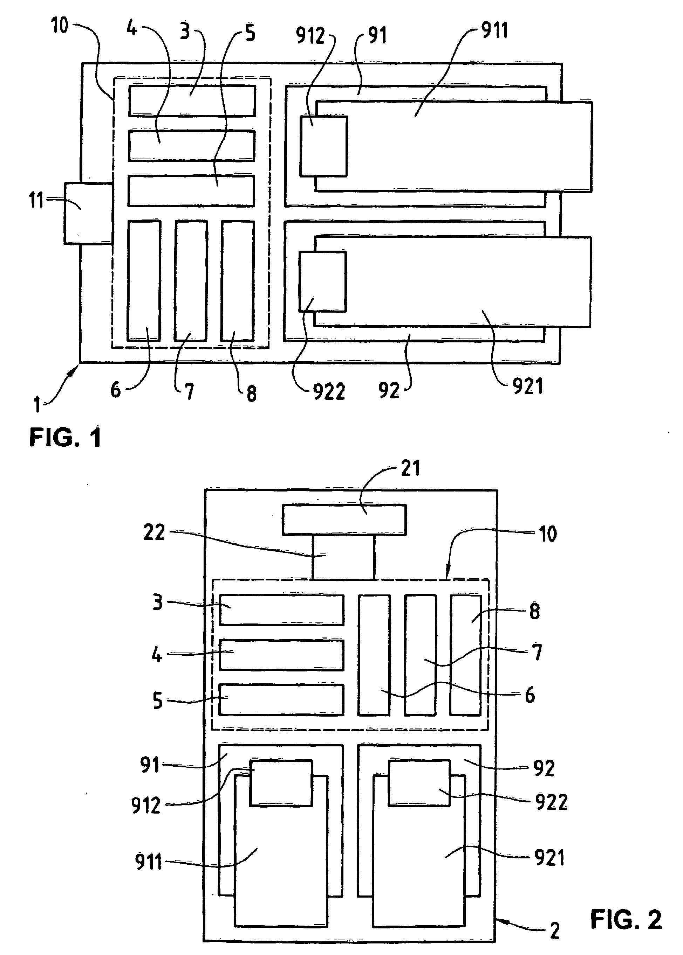

In den Figuren 1 und 2 werden einander entsprechende, funktional gleiche Komponenten durch gleiche Bezugszeichen bezeichnet.

In der Figur 1 bezeichnet das Bezugszeichen 1 eine elektronische Weiche, die eine Schnittstelle 11 zur Verbindung mit einer Modulschnittstelle eines Kommunikationsendgeräts umfasst, welche Modulschnittstelle zur Verbindung mit Teilnehmeridentifizierungsmodulen eingerichtet ist. Eine solche Modulschnittstelle für die Kommunikation zwischen einem mobilen GSM Kommunikationsendgerät und einem als SIM-Karte ausgeführten Teilnehmeridentifizierungsmodul ist in der technischen Norm GSM 11.11 vom ETSI definiert. In der ETSI Norm GSM 11.11 wird für die Modulschnittstelle auch ein Applikationsprotokoll definiert, welches dem Kommunikationsendgerät ermöglicht; auf der SIM-Karte definierte Applikationsfunktionen zu initiieren und welches der SIM-Karte ermöglicht, entsprechende Funktionsresultate respektive Antworten an das Kommunikationsendgerät zu übermitteln. Die Initiierung von Funktionen wird mittels speziellen Protokolldateneinheiten bewirkt, den Befehlsapplikationsprotökolldateneinheiten (C-APDU, Command Application Protocol Data Unit), die vom Kommunikationsendgerät über die Modulschnittstelle an die SIM-Karte übermittelt werden. Die Tabelle 1 zeigt den Aufbau einer Befehlsapplikationsprotokolldateneinheit, welche eine Instruktionsklasse CLA, einen Instruktionscode INS, verschiedene Parameter P1, P2, P3 sowie Daten umfasst.

**Tabelle 1**

| | | | | | |
|---|---|---|---|---|---|
| CLA | INS | P1 | P2 | P3 | Daten |

Die Resultatübermittlung respektive Beantwortung von initiierten Funktionen wird mittels spezieller Protokolldateneinheiten bewirkt, den Antwortapplikationsprotokolldateneinheiten (R-APDU, Response Application Protocol Data Unit), die von der SIM-Karte über die Modulschnittstelle an das Kommunikationsendgerät übermittelt werden. Die Tabelle 2 zeigt den Aufbau einer Antwortapplikationsprotokolldateneinheit, welche Daten sowie zwei Statuswörter SW1 und SW2 umfasst.

**Tabelle 2**

| | | |
|---|---|---|
| Daten | SW2 | SW2 |

In der Figur 2 ist ein Kommunikationsendgerät 2 mit einer solchen Modulschnittstelle 22 zur Verbindung mit Teilnehmeridentifizierungsmodulen dargestellt. Wie in der Figur 2 schematisch dargestellt ist, ist die Modulschnittstelle 22 mit einem Kommunikationsmodul 21 des Kommunikationsendgeräts 2 verbunden. Das Kommunikationsmodul 21 umfasst sämtliche Hard- und Softwarekomponenten, die der Kommunikation des Kommunikationsendgeräts 2 dienen und die insbesondere die Ausführung des oben beschriebenen Applikationsprotokolls über die Modulschnittstelle 22 mit einer SIM-Karte ermöglichen. Das Kommunikationsendgerät 2 ist vorzugsweise ein mobiles Kommunikationsendgerät, dessen Kommunikationsmodul 21 für die Kommunikation über Mobilfunknetze eingerichtet ist, beispielsweise GSM- oder UMTS-Mobilfunk= netze (Universal Mobile Telecommunication System). Das Kommunikationsendgerät 2 ist beispielsweise als Mobilfunktelefon, als PDA- (Personal Data Assistarit) oder Laptop-Computer ausgeführt. Der Fachmann wird verstehen, dass das Kommunikationsendgerät 2 auch als fest installierte Vorrichtung ausgeführt werden kann.

Die in der Figur 1 dargestellte elektronische Weiche 1 ist so eingerichtet, dass sie an Stelle einer SIM-Karte direkt oder über eine Kabelverbindung mit der Modulschnittstelle 22 eines Kömmunikationsendgeräts verbunden werden kann.

Wie in der Figur 1 dargestellt ist, umfasst die elektronische Weiche 1 zwei Aufnahmemodule 91, 92 zur Aufnahme von Chipkarten 911 respektive 921. Die Chipkarten 911, 921 werden über die Modulschnittstellen 912, 922, die der oben beschriebenen Modulschnittstelle 22 entsprechen, elektrisch mit der elektronischen Weiche 1 verbunden. Der Fachmann wird verstehen, dass die elektronische Weiche 1 auch mit mehr als zwei Aufnahmemodulen zur Aufnahme von mehr als zwei Chipkarten ausgeführt sein kann. Die Aufnahmemodule sind insbesondere für die Aufnahme von Chipkarten im SIM-Karten-Format ausgeführt. Die SIM-Karten existieren heute in zwei gemäss ISO/IEC 7816 genormten Formaten. Das "Full Size"-Format entspricht der Grösse einer Kreditkarte, während das "Plug-In"-Format, welches speziell an die miniaturisierten tragbaren Mobilfunktelefone angepasst ist, ungefähr 25 mm × 10 mm gross ist.

Wie in der Figur 1 dargestellt ist, umfasst die elektronische Weiche 1 ein durch das Bezugszeichen 10 bezeichnetes Weichenmodul, welches elektrisch mit der Schnittstelle 11 verbunden ist. Das Weichenmodul 10 umfasst mehrere funktionale Module, nämlich das Protokollanalysemodul 3, das Steuermodul 4 und das Zustandskontrollmodul 5. Die funktionalen Module sind vorzugsweise als programmierte Softwaremodule zur Steuerung eines Prozessors ausgeführt und sind in einem Programmspeicher gespeichert. Der Fachmann wird verstehen, dass die funktionalen Module auch vollständig oder zum Teil hardwaremässig ausgeführt werden können. Neben dem Programmspeicher und dem Prozessor zur Speicherung respektive Ausführung der funktionalen Module umfasst das Weichenmodul 10 zudem einen Konfigurationsspeicher 6, einen Zustandsspeicher 7 und einen Meldungsspeicher 8.

Wie in der Figur 2 dargestellt ist, sind die Aufnahmemodule 91, 92 in einer alternativen Ausführung fest im Kommunikationsendgerät 2 eingebaut. Zudem ist auch das oben beschriebene Weichenmodul 10, in der in der Figur 2 dargestellten Ausführungsvariante, fest im Kommunikationsendgerät 2 ausgeführt und mit der Modulschnittstelle 22 elektrisch verbunden. An dieser Stelle soll festgehalten werden, dass das Weichenmodul 10 als Zusammenfassung funktional zusammengehörender Einheiten zu verstehen ist, die nicht gezwungenermassen eng gekoppelt in einem kohärenten Modul ausgeführt sein müssen, sondern auch lose gekoppelt und, insbesondere im Kommunikationsendgerät 2, verteilt ausgeführt sein können.

In den folgenden Abschnitten werden die Funktionalität der funktionalen Module sowie die Bedeutung der verschiedenen Datenspeicher des Weichenmoduls 10 beschrieben. Dabei bezieht sich der Austausch von Protokolldateneinheiten zwischen funktionalen Modulen des Weichenmoduls 10 und einem Kommunikationsendgerät einerseits auf den nicht dargestellten Zustand, in welchem die in der Figur 1 dargestellte elektronische Weiche 1 mittels der Schnittstelle 11 mit der oben beschriebenen Modulschnittstelle eines Kommunikationsendgeräts verbunden ist, und andererseits auf das in der Figur 2 dargestellte Kommunikationsendgerät 2, in welchem das Weichenmodul 10 über die Modulschnittstelle 22 mit dem Kommunikationsmodul 21 des Kommunikationsendgeräts 2 verbunden ist.

Im Konfigurationsspeicher 6 werden Konfigurationsdaten gespeichert, die Angaben umfassen über die Funktionalität der Chipkarten 911, 921, die in den Aufnahmemodulen 91 respektive 92 eingeführt sind. Die kartenspezifischen Konfigurationsdaten werden beispielsweise durch ein nicht dargestelltes funktionales Konfigurationsmodul des Weichenmoduls 10 in Konfigurationstabellen gelesen, die in den Chipkarten 911, 921 gespeichert sind.

**Tabelle 3**

| Aufnahmemodul | Prozedur | Funktion |
|---|---|---|
| 91 | Allgemein | EF Lesen |
| 91 | Allgemein | EF Aktualisieren |
| 91 | Allgemein | EF Erhöhen |
| 91 | SIM Verwaltung | SIM Initialisieren |
| 91 | SIM Verwaltung | Beenden GSM Session |
| 91 | SIM Verwaltung | ... |
| 91 | Karteninhaberverifizierung | Karteninhaberverifizierung |
| 91 | Karteninhaberverifizierung | ... |
| 92 | GSM Sicherheit | Algorithmusberechnung |
| 92 | GSM Sicherheit | IMSI Anforderung |
| 91 | GSM Sicherheit | ... |
| 91 | Teilnehmer | Nummernwahl |
| 91 | Teilnehmer | Kurzmeldungen |
| 91 | Teilnehmer | ... |
| 91 | STK | Datenbezug |
| 91 | STK | Menuwahl |
| 91 | STK | ... |

In der Tabelle 3 ist ein Ausschnitt eines Beispiels eines Konfigurationsspeichers 6 dargestellt, in welchem die definierten Applikationsfunktionen den Aufnahmemodulen 91, 92 respektive den damit verbundenen Chipkarten 911, 921 zugeordnet sind. Im Beispiel gemäss der Tabelle 3 werden aus den in GSM 11.11 definierten sicherheitsrelevanten Prozeduren die Funktionen für GSM Algorithmusberechnung und für die IMSI Anforderung (International Mobile Subscriber Identity) auf der Chipkarte 921 im Aufnahmemodul 92 ausgeführt. Alle anderen Funktionen werden auf der Chipkarte 911 im Aufnahmemodul 91 ausgeführt.

Das Protokollanalysemodul 3 speichert jede Protokolldateneinheit (C-APDU), die über die Schnittstelle 11 respektive über die Modulschnittstelle 22 empfangen wird, im Meldungsspeicher 8. Das Protokollanalysemodul 3 ermittelt den Instruktionstyp der empfangenen Protokolldateneinheit (C-APDU) auf Grund der Instruktionsklasse und des Instruktionscodes, die in der empfangenen Protokolldateneinheit (C-APDU) enthalten sind.

Das Steuermodul 4 übermittelt in Abhängigkeit des ermittelten Instruktionstyps und in Abhängigkeit der im Konfigurationsspeicher 6 gespeicherten Konfigurationsdaten eine oder mehrere Protokolldateneinheiten (C-APDU) an die Chipkarte 911 und/oder an die Chipkarte 921. Das Steuermodul 4 übermittelt die Protokolldateneinheiten (C-APDU) zudem in Abhängigkeit von Zustandswerten, die im Zustandsspeicher 7 gespeichert sind, an die Chipkarte 911 und/oder an die Chipkarte 921, wie später detaillierter beschrieben wird. Typischerweise werden die C-APDU, die vom Kommunikationsendgerät empfangen wurden, konfigurationsabhängig an die Chipkarte 91 oder an die Chipkarte 92 weitergeleitet. Es ist auch möglich, auf Grund einer vom Kommunikationsendgerät empfangenen C-APDU mehrere C-APDU zu bestimmen und gezielt an die Chipkarte 91 und an die Chipkarte 92 zu übermitteln, um zur Beantwortung der empfangenen C-APDU sowohl Funktionen auf der Chipkarte 91 als auch auf der Chipkarte 92 ausführen zu lassen. Wenn mehrere C-APDU an eine oder beide der Chipkarten 91, 92 übermittelt werden, bestimmt das Steuermodul auch die Reihenfolge in der die C-APDU übermittelt werden. Das Steuermodul 4 übermittelt zudem Protokolldateneinheiten in Abhängigkeit von den gespeicherten Zustandswerten und von Protokolldateneinheiten, die von der Chipkarte 911 und/oder von der Chipkarte 921 empfangen wurden, wie später detaillierter beschrieben wird.

Das Zustandskontrollmodul 5 speichert im Zustandsspeicher 7 Zustandswerte abhängig von programmierbaren, im Weichenmodul gespeicherten Zustandskontrollregeln, abhängig vom Instruktionstyp einer C-APDU, die vom Kommunikationsendgerät (respektive Kommunikationsmodul 21) empfangen wurde, abhängig von einer R-APDU, die von der Chipkarte 911 oder von der Chipkarte 921 empfangen wurde, und/oder abhängig davon, ob die betreffende Protokolldateneinheit von der Chipkarte 911, von der Chipkarte 921 oder vom Kommunikationsendgerät empfangen wurde. Die gespeicherten Zustandswerte geben jeweils den aktuellen Zustand des Weichenmoduls 10 (respektive der zugehörenden elektronischen Weiche 1 oder des zugehörenden Kommuhikationsendgeräts 2) wieder. Falls gleichzeitig mehrere C-APDU empfangen und verarbeitet werden sollen, werden den verschiedenen C-APDU jeweils individuelle Zustandswerte zugeordnet und gespeichert.

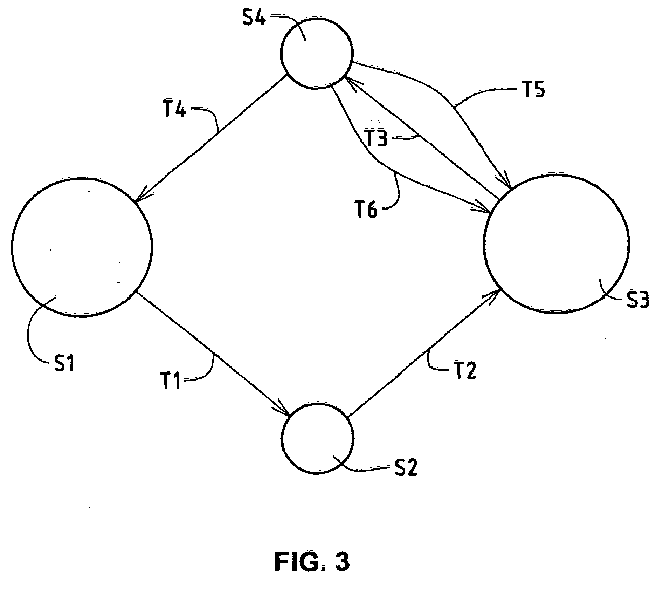

In der Figur 3 bezeichnet das Bezugszeichen S1 einen Bereitschaftszustand, in den das Weichenmodul 10 respektive die zugehörende elektronische Weiche 1 oder das zugehörende Komrnunikätionsendgerät 2 beim Einschalten gesetzt wird, wobei der entsprechende Zustandswert im Zustandsspeicher 7 gespeichert wird.

Beim Empfang einer C-APDU vom Kommunikationsendgerät (respektive vom Kommunikationsmodul 21) im Weichehmödul 10 führt das Zustandskontrollmodul 5 das Weichenmodul 10, wie durch den Übergang T1 angedeutet, in den Zwischenzustand S2 über, in welchem der Instruktionstyp der empfangenen C-APDU ermittelt wird.

Durch Übermitteln von einer oder mehreren C-APDU vom Weichenmodul 10 an die Chipkarte 91 und/oder an die Chipkarte 92 führt das Zustandskontrollmodul 5 das Weichenmodul 10, wie durch den Übergang T2 angedeutet, in den Wartezustand S3 über, in welchem eine oder mehrere R-APDU von der Chipkarte 91 und/oder von der Chipkarte 92 erwartet werden.

Beim Empfang einer R-APDU im Weichenmodul 10 von der Chipkarte 91 oder von der Chipkarte 92 führt das Zustandskontrollmodul 5 das Weichenmodul 10, wie durch den Übergang T3 angedeutet, in den Zwischenzustand S4 über, in welchem die empfangene R-APDU untersucht und der zugehörenden C-APDU zugeordnet wird, die anlässlich des Übergangs T1 empfangen wurde.

Falls im Weichenmodul 10 für die zugehörende, anlässlich des Übergangs T1 empfangene C-APDU keine weiteren R-APDU von der Chipkarte 91 und/oder von der Chipkarte 92 erwartet werden, wird vom Weichenmodul 10 basierend auf der anlässlich des Übergangs T3 empfangenen R-APDU und gegebenenfalls basierend auf weiteren im Meldungsspeicher 8 für die zugehörende C-APDU gespeicherten R-APDU eine resultierende R-APDU an das anfragende Kommunikationsendgerät (respektive Kommunikationsmodul 21) übermittelt und das Weichenmodul 10 wird, wie durch den Übergang T4 angedeutet, durch das Zustandskontrollmodul 5 in den Bereitschaftszustand S1 zurückgeführt.

Falls jedoch im Weichenmodul 10 für die zugehörende, anlässlich des Übergangs T1 empfangene C-APDU weitere R-APDU von der Chipkarte 91 und/oder von der Chipkarte 92 erwartet werden, wird die anlässlich des Übergangs T3 empfangene R-APDU im Meldungsspeicher 8 der zugehörenden C-APDU zugeordnet gespeichert. Abhängig vom ermittelten Instruktionstyp der anlässlich des Übergangs T1 empfangenen C-APDU und abhängig von der anlässlich des Übergangs T3 empfangenen R-APDU, wird bestimmt, ob eine von der anlässlich des Übergangs T3 empfangenen R-APDU abhängige C-APDU an die Chipkarte 91 oder an die Chipkarte 92 übermittelt werden muss. Gegebenenfalls wird vom Weichenmodul 10 eine abhängige C-APDU an die Chipkarte 91 oder an die Chipkarte 92 übermittelt und das Weichenmodul 10 wird, wie durch den Übergang T5 angedeutet, durch das Zustandskontrollmodul 5 in den Wartezustand S3 zurückgeführt. Andernfalls wird das Weichenmodul 10, wie durch den Übergang T6 angedeutet, durch das Zustandskontrollmodul 5 in den Wartezustand S3 zurückgeführt.

In der Tabelle 4 werden der Datenaustausch und die Übergänge von vier Grundmustern a), b), c), d) für den Empfang im Weichenmodul 10 von C-APDU vom Kommunikationsendgerät (respektive Kommunikationsmodul 21), die Übermittlung von C-APDU vom Weichenmodul 10 an die Chipkarten 911, 921, die Sammlung von R-APDU im Weichenmodul 10 von den Chipkarten 911, 921 und die Übermittlung von resultierenden C-APDU vom Weichenmodul 10 an das anfragende Kommunikationsendgerät (respektive Kommunikationsmodul 21) dargestellt. Die Grundmuster a), b), c), d) können selber wieder miteinander kombiniert werden. Dabei ist es auch möglich individuelle Grundmuster a), b), c), d) mehrfach zu wiederholen und/oder sequentiell zu verketten. Bei der sequentiellen Verkettung mehrerer Grundmuster a), b), c), d) unterbleibt die Ausgabe der resultierenden R-APDU vom Weichenmodul 10 an das Kommunikationsendgerät (respektive Kommunikationsmodul 21) nach der Ausführung des ersten Grundmusters a), b), c), d). Bei der sequentiellen Verkettung wird auf Grund von resultierenden R-APDU des ersten Grundmusters a), b), c), d) eine C-APDU erzeugt, die für die Ausführung des nachfolgenden Grundmusters a), b), c), d) verwendet wird.

**Tabelle 4**

| | Übergang | Empfang C-APDU | C-APDU an 911 | R-APDU von 911 | C-APDU an 921 | R-APDU von 921 | Ausgabe R-APDU |
|---|---|---|---|---|---|---|---|
| a) | T1, T2 | X | X | | | | |
| | T3, T4 | | | X | | | X |
| b) | T1, T2 | X | X | | X | | |
| | T3, T6 | | | X | | | |
| | T3,T4 | | | | | X | X |
| c) | T1, T2 | X | X | | | | |
| | T3, T5 | | | X | X | | |
| | T3, T4 | | | | | X | X |
| d) | T1, T2 | X | X | | | | |
| | T3, T5 | | X | X | | | |
| | T3, T4 | | | X | | | X |

Im Grundmuster a) wird vom Weichenmodul 10 entsprechend der vom Kommunikationsendgerät empfangenen C-APDU eine C-APDU an die Chipkarte 911 übermittelt und das Weichenmodul 10 wird durch die Übergänge T1 und T2 vom Bereitschaftszustand S1 in den Wartezustand S3 geführt. In der Chipkarte 911 wird entsprechend der Instruktionsklasse und dem Instruktionscode, die in der C-APDU enthalten sind, eine Funktion ausgeführt und eine R-APDU an das Weichenmodul 10 übermittelt. Entsprechend der von der Chipkarte 911 empfangenen R-APDU wird vom Weichenmodul 10 eine R-APDU an das Kommunikationsendgerät (respektive Kommunikationsmodul 21) übermittelt und das Weichenmodul 10 wird durch die Übergänge T3 und T4 vom Wartezustand S3 in den Bereitschaftszustand S1 zurückgeführt.

Im Grundmuster b) werden vom Weichenmodul 10 entsprechend der vom Kommunikationsendgerät empfangenen C-APDU eine erste C-APDU an die Chipkarte 911 übermittelt, eine zweite C-APDU an die Chipkarte 921 übermittelt und das Weichenmodul 10 wird durch die Übergänge T1 und T2 vom Bereitschaftszustand S1 in den Wartezustand S3 geführt. In den Chipkarten 911, 921 wird entsprechend den Instruktionsklassen und den Instruktionscodes, die in den C-APDU enthalten sind, jeweils eine Funktion ausgeführt und eine R-APDU an das Weichenmodul 10 übermittelt. Die von der Chipkarte 911 empfangene R-APDU wird vom Weichenmodul 10 gespeichert und das Weichenmodul 10 wird durch die Übergänge T3 und T6 in den Wartezustand S3 zurückgeführt. Entsprechend der von der Chipkarte 921 empfangenen R-APDU und der vorgängig gespeicherten R-APDU von der Chipkarte 911 wird vom Weichenmodul 10 eine resultierende R-APDU an das Kommunikationsendgerät (respektive Kommunikationsmodul 21) übermittelt und das Weichenmodul 10 wird durch die Übergänge T3 und T4 vom Wartezustand S3 in den Bereitschaftszustand S1 zurückgeführt.

Im Grundmuster c) wird vom Weichenmodul 10 entsprechend der vom Kommunikationsendgerät empfangenen C-APDU eine erste C-APDU an die Chipkarte 911 übermittelt und das Weichenmödul 10 wird durch die Übergänge T1 und T2 vom Bereitschaftszustand S1 in den Wartezustand S3 geführt. In der Chipkarte 911 wird entsprechend der Instruktionsklasse und dem Instruktionscode, die in der C-APDU enthalten sind, eine erste Funktion ausgeführt und eine erste R-APDU an das Weichenmodul 10 übermittelt. Die von der Chipkarte 911 empfangene erste R-APDU wird vom Weichenmoduf 10 gespeichert. Abhängig von der empfangenen ersten R-APDU wird vom Weichenmodul 10 eine zweite C-APDU an die Chipkarte 921 übermittelt und das Weichenmodul 10 wird durch die Übergänge T3 und T5 in den Wartezustand S3 zurückgeführt. In der Chipkarte 921 wird entsprechend der Instruktionsklasse und dem Instruktionscode, die in der zweiten C-APDU enthalten sind, eine zweite Funktion ausgeführt und eine zweite R-APDU an das Weichenmodul 10 übermittelt. Entsprechend der von der Chipkarte 921 empfangenen zweiten R-APDU und der vorgängig gespeicherten ersten R-APDU von der Chipkarte 911 wird vom Weichenmodul 10 eine resultierende R-APDU an das Kommunikationsendgerät (respektive Kommunikationsmodul 21) übermittelt und das Weichenmodul 10 wird durch die Übergänge T3 und T4 vom Wartezustand S3 in den Bereitschaftszustand S1 zurückgeführt.

Bei einer sequentiellen Verkettung von mehreren Grundmustern c) wird entsprechend der von der Chipkarte 921 empfangenen zweiten R-APDU und der vorgängig gespeicherten ersten R-APDU von der Chipkarte 911 vom Weichenmodul 10 eine C-APDU bestimmt und an die Chipkarte 911 übermittelt und das Weichenmodul 10 wird durch die Übergänge T3 und T5 in den Wartezustand S3 zurückgeführt.

Das Grundmuster d) unterschiedet sich vom Grundmuster c) in Wesentlichen nur dadurch, dass abhängig von der ersten R-APDU, die von der Chipkarte 911 empfangen wird, vom Weichenmodul 10 eine zweite C-APDU an die selbe Chipkarte 911 übermittelt wird, so dass die zweite Funktion in der selben Chipkarte 911 wie die erste Funktion ausgeführt wird.

Obwohl die oben stehenden Ausführungen jeweils auf zwei Aufhahmemodule 91, 92 zur Aufnahme von zwei Chipkarten 911, 921 begrenzt waren, soll abschliessend festgehalten werden, dass die elektronische Weiche 1, respektive das Kommunikationsendgerät 2, mit Weiteren Aufnahmemodulen ausgeführt werden können, so dass mehr als zwei Chipkarten aufgenommen werden können, und dass das Weichenmodul 10 entsprechend für die Steuerung von mehr als zwei Chipkarten ausgelegt werden kann.

## Patentansprüche

1. Elektronische Weiche (1) für Kommunikationsendgeräte die über eine Modulschnittstelle (22) zur Verbindung mit Teilnehmeridentifizierungsmodulen verfügen, umfassend:
- eine Schnittstelle (11) zur Verbindung mit der Modulschnittstelle (22) des Kommunikationsendgerats.
- ein erstes Aufnahmemodul (91) zur Aufnahme einer ersten Chipkarte (911),
- mindestens ein zweites Aufnahmemodul (92) zur Aufnahme einer zweiten Chipkarte (921), und
- ein Protokollanalysemodul (3) zur Ermittlung eines Instruktionstyps aus einer über die Modulschnittstelle (22) empfangenen Protokolldateneinheit vom Kommunikationsendgerät,
***gekennzeichnet durch**
- ein Steuermodul (4) zum Übermitteln der genannten Protokolldateneinheit in Abhängigkeit des ermittelten instruktionstyps an die erste Chipkarte (911) und/oder an die zweite Chipkarte (921), und zum Übermitteln einer von der ersten Chipkarte (911) und/oder von der zweiten Chipkarte (921) gesendeten Protokolldateneinheit.

2. Elektronische Weiche (1) nach Anspruch 1, **dadurch gekennzeichnet, dass** sie einen Konfigurationsspeicher (6) zum Speichern von Konfigurationsdaten umfasst, welche Konfigurationsdaten Angaben über die Funktionalität der ersten Chipkarte (911) und die Funktionalität der zweiten Chipkarte (921) umfassen, und dass das Steuermodul (4) eingerichtet ist zum Übermitteln von Protokolldateneinheiten in Abhängigkeit der gespeicherten Konfigurationsdaten an die erste Chipkarte (911) oder an die zweite Chipkarte (921).

3. Elektronische Weiche (1) nach einem der Ansprüche 1 oder 2, **dadurch gekennzeichnet, dass** das Steuermodul (4) eingerichtet ist zum Übermitteln von Protokolldateneinheiten an die erste Chipkarte (911) in Abhängigkeit einer von der zweiten Chipkarte (921) empfangenen Protokolldateneinheit,

4. Elektronische Weiche (1) nach einem der Ansprüche 1 bis 3, **dadurch gekennzeichnet, dass** sie einen Zustandsspeicher (7) zum Speichern von Zustandswerten umfasst, und dass das Steuermodul (4) eingerichtet ist zum Übermitteln von Protokolldateneinheiten in Abhängigkeit der gespeicherten Zustandswerte an die erste Chipkarte (911), an die zweite Chipkarte (921) oder an das Kommunikationsendgerät.

5. Elektronische Weiche (1) nach einem der Ansprüche 1 bis 4, **dadurch gekennzeichnet, dass** sie ein Zustandskontrollmodul (5) umfasst zum Speichern von Zustandswerten abhängig vom Instruktionstyp einer Protokolldateneinheit, die vom Kommunikationsendgerät empfangen wurde, abhängig von einer Frotokolldateneinheit, die von der ersten Chipkarte (911) oder von der zweiten Chipkarte (921) empfangen wurde, und/oder abhängig davon, ob die Protokolldateneinheit von der ersten Chipkarte (911), von der zweiten Chipkarte (921) oder vom Kommunikationsendgerät empfangen wurde.

6. Elektronische Weiche (1) nach einem der Ansprüche 1 bis 5, **dadurch gekennzeichnet, dass** sie einen Meldungsspeicher (8) zum Speichern von empfangenen Protokolldateneinheiten umfasst, und dass das Steuermodul (4) eingerichtet ist zum Übermitteln von Protokolldateneinheiten an das Kommunikationsendgerät in Abhängigkeit von gespeicherten Protokolldateneinheiten, die von der ersten Chipkarte (911) und/oder von der zweiten Chipkarte (921) empfangen wurden.

7. Kommunikationsverfahren für die Kommunikation zwischen einem Kommunikationsendgerät (2), das über eine Modulschnittstelle (22) zur Verbindung mit Teilnehmeridentifizierungsmodulen verfügt, und mindestens zwei Chipkarten (911, 921), umfassend:
Verbinden der Chipkarten (911, 921) mit dem Kommunikationsendgerät (2),
Empfangen (T1) einer Protokolldateneinheit vom kommunikationsendgerät (2) über die Modulschnittstelle (22),
Ermitteln (S2) durch ein Protokollanalysemodul (3) eines Instruktionstyps aus der empfangenen Protokolldateneinheit,
**gekennzeichnet durch**
Übermitteln (T2) **durch** ein Steuermodul (4) der Protokolldateneinheit in Abhängigkeit des ermittelten Instruktionstyps an eine erste der Chipkarten (911) und/oder an eine zweite der Chipkarten (921), und
Übermitteln (T4) **durch** das Steuermodul (4) von von der ersten Chipkarte (911) und/oder von der zweiten Chipkarte (921) gesendeten Protokolldateneinheiten an die Modulschnittstelle (22).

8. Kommunikationsverfahren nach Anspruch 7, **gekennzeichnet durch** Speichern von Konfigurationsdaten im Kommunikationsendgerät (2), welche Konfigurationsdaten Angaben über die Funktionalität der ersten Chipkarte (911) und die Funktionalität der zweiten Chipkarte (921) umfassen, und **durch** Übermitteln von Protokolldateneinheiten in Abhängigkeit der gespeicherten Konfigurationsdaten an die erste Chipkarte (911) oder an die zweite Chipkarte (921).

9. Kommunikationsverfahren nach einem der Ansprüche 7 oder 8, **gekennzeichnet durch** Übermitteln von Protokolldateneinheiten an die erste Chipkarte (911) in Abhängigkeit einer von der zweiten Chipkarte (921) empfangenen Protokolldateneinheit.

10. Kommunikationsverfahren nach einem der Ansprüche 7 bis 9, **gekennzeichnet durch** Speichern von Zustandswerten im Kommunikationsendgerät (2) und **durch** Übermitteln von Protokolldateneinheiten in Abhängigkeit der gespeicherten Zustandswerte an die erste Chipkarte (911), an die zweite Chipkarte (921) oder an das Kommunikationsendgerät (2).

11. Kommunikationsverfahren nach einem der Ansprüche 7 bis 10, **gekennzeichnet durch** Speichern von Zustandswerten im Kommunikationsendgerät (2) abhängig vom Instruktionstyp einer Protokolldateneinheit, die vom Kommunikationsendgerät (2) empfangen wurde, abhängig von einer Protokolldateneinheit, die von der ersten Chipkarte (911) oder von der zweiten Chipkarte (921) empfangen wurde, und/oder abhängig davon, ob die Protokolldateneinheit von der ersten Chipkarte (911), von der zweiten Chipkarte (921) oder vom Kommunikationsendgerät (2) empfangen wurde.

12. Kömmunikationsverfähren nach einem der Ansprüche 7 bis 11, **gekennzeichnet durch** Speichern von empfangenen Protokolldateneinheiten im Kommunikationsendgerät (2) und **durch** Übermitteln von Protokolldateneinheiten an das Kommunikationsendgerät (2) in Abhängigkeit von gespeicherten Protokolldateneinheiten, die von der ersten Chipkarte (911) und/oder von der zweiten Chipkarte (921) empfangen wurden.

## Claims

1. Electronic switch (1) for communication terminals, having a module interface (22) for connection to subscriber modules, comprising:
- an interface (11) for connection to the module interface (22) of the communication terminal,
- a first receiving module (91) for receiving a first chipcard (911),
- at least one second receiving module (92) for receiving a second chipcard (921), and
- a protocol analysis module (3) for determining an instruction type from a protocol data unit, of the communication terminal, received via the module interface (22)
**characterised by**
- a control module (4) for transmitting said protocol data unit depending upon the determined instruction type to the first chipcard (911) and/or to the second chipcard (921), and for transmission of a protocol data unit transmitted from the first chipcard (911) and/or from the second chipcard (921).

2. Electronic switch (1) according to claim 1, **characterised in that** it comprises a configuration memory (6) for storing configuration data, which configuration data comprises indications about the functionality of the first chipcard (911) and the functionality of the second chipcard (921), and **in that** the control module (4) is set up to transmit protocol data units depending upon the stored configuration data to the first chipcard (911) or to the second chipcard (921).

3. Electronic switch (1) according to one of the claims 1 or 2, **characterised in that** the control module (4) is set up to transmit protocol data units to the first chipcard (911) depending upon a protocol data unit received from the second chipcard (921).

4. Electronic switch (1) according to one of the claims 1 to 3, **characterised in that** it comprises a status memory (7) for storing status values, and **in that** the control module (4) is set up to transmit protocol data units depending upon the stored status values to the first chipcard (911), to the second chipcard (921) or to the communication terminal.

5. Electronic switch (1) according to one of the claims 1 to 4, **characterised in that** it comprises a status control module (5) for storing status values depending upon the instruction type of a protocol data unit, which was received from the communication terminal, depending upon a protocol data unit which was received from the first chipcard (911) or from the second chipcard (921), and/or depending upon whether the protocol data unit was received from the first chipcard (911), from the second chipcard (921) or from the communication terminal.

6. Electronic switch (1) according to one of the claims 1 to 5, **characterised in that** it comprises a reporting memory (8) for storing received protocol data units, and **in that** the control module (4) is set up to transmit protocol data units to the communication terminal depending upon stored protocol data units which have been received from the first chipcard (911) and/or from the second chipcard (921).

7. Communication method for communication between a communication terminal (2), having a module interface (22) for connection to subscriber modules, and at least two chipcards (911, 921), comprising:
Connecting the chipcards (911, 921) to the communication terminal (2),
Receiving (T1) a protocol data unit from the communication terminal (2) via the module interface (22),
Determining (S2) by a protocol analysis module (3) an instruction type from the received protocol data unit,
**characterised by**
Transmitting (T2) by a control module (4) the protocol data unit depending upon the determined instruction type to a first of the chipcards (911) and/or to a second of the chipcards (921), and
Transmitting (T4) to the module interface (22) by the control module (4) protocol data units transmitted from the first chipcard (911) and/or from the second chipcard (921).

8. Communication method according to claim 7, **characterised by** storing of configuration data in the communication terminal (2), which configuration data comprise indications about the functionality of the first chipcard (911) and the functionality of the second chipcard (921), and by transmission of protocol data units to the first chipcard (911) or to the second chipcard (921) depending upon the stored configuration data.

9. Communication method according to one of the claims 7 or 8, **characterised by** transmission of protocol data units to the first chipcard (911) depending upon a protocol data unit received from the second chipcard (921).

10. Communication method according to one of the claims 7 to 9, **characterised by** storing of status values in the communication terminal (2) and by transmission of protocol data units to the first chipcard (911), to the second chipcard (921) or to the communication terminal (2), depending upon the stored status values.

11. Communication method according to one of the claims 7 to 10, **characterised by** storing of status values in the communication terminal (2), depending upon the instruction type of a protocol data unit, which was received from the communication terminal (2), depending upon a protocol data unit, which was received from the first chipcard (911) or from the second chipcard (921), and/or depending upon whether the protocol data unit was received from the first chipcard (911), from the second chipcard (921) or from the communication terminal (2).

12. Communication method according to one of the claims 7 to 11, **characterised by** storing of received protocol data units in the communication terminal (2) and by transmission of protocol data units to the communication terminal (2) depending upon stored protocol data units which were received from the first chipcard (911) and/or from the second chipcard (921).

## Revendications

1. Aiguillage électronique (1) pour des terminaux de communication qui disposent d'une interface de module (22) pour la liaison avec des modules d'identification d'abonnés, comprenant :
- une interface (11) pour la connexion avec l'interface de module (22) du terminal de communication,
- un premier module de réception (91) pour la réception d'une première carte à puce (911),
- au moins un second module de logement (92) pour le logement d'une seconde carte à puce (921) et
- un module d'analyse de protocole (3) pour la détermination d'un type d'instruction par le terminal de communication à partir d'une unité de données protocolaires réceptionnées par l'interface de module (22),
**caractérisé par**
- un module de commande (4) pour la transmission de l'unité de données protocolaires en fonction du type d'instruction défini à la première carte à puce (911) et/ou à la seconde carte à puce (921) et pour la transmission d'une unité de données de protocolaires émise par la première carte à puces (911) et/ou la seconde carte à puce (921).

2. Aiguillage électronique (1) selon la revendication 1, **caractérisé en ce qu'**elle comprend une mémoire de configuration (6) pour le stockage de données de configuration, les données de configuration comprenant des indications sur la fonctionnalité de la première carte à puce (911) et la fonctionnalité de la seconde carte à puce (921) et **en ce que** le module de commande (4) est configuré pour la transmission d'unités de données protocolaires en fonction des données de configurations stockées à la première carte à puce (911) ou à la seconde carte à puce (921).

3. Aiguillage électronique (1) selon l'une des revendications 1 ou 2, **caractérisé en ce que** le module de commande (4) est configuré pour la transmission d'unités de données protocolaires à la première carte à puce (911) en fonction d'une unité de données protocolaires reçue par la seconde carte à puce (921).

4. Aiguillage électronique (1) selon l'une des revendications 1 à 3, **caractérisé en ce qu'**il comprend une mémoire d'état (7) pour le stockage de valeurs d'état et **en ce que** le module de commande (4) est configuré pour la transmission d'unités de données protocolaires, en fonction des valeurs d'état stockées, à la première carte à puce (911), à la seconde carte à puce (921) ou au terminal de communication.

5. Aiguillage électronique (1) selon l'une des revendications 1 à 4, **caractérisé en ce qu'**il comprend un module de contrôle d'état (5) pour le stockage de valeurs d'état en fonction du type d'instruction d'une unité de données protocolaires qui a été réceptionnée par le terminal de communication, en fonction d'une unité de données protocolaires qui a été reçue par la seconde carte à puce (921) et/ou en fonction du fait que l'unité de données protocolaires a été reçue par la première carte à puce (911), par la seconde carte à puce (921) ou par le terminal de communication.

6. Aiguillage électronique (1) selon l'une des revendications 1 à 5, **caractérisé en ce qu'**elle comprend une mémoire de message (8) pour le stockage d'unités de données protocolaires reçues et **en ce que** le module de commande (4) est configuré pour la transmission d'unités de données protocolaires stockées qui ont été reçues par la première carte à puce (911) et/ou par la seconde carte à puce (921).

7. Procédé de communication pour la communication entre un terminal de communication (2) qui dispose d'une interface de module (22) pour la connexion à des modules d'identification d'abonnés et au moins deux cartes à puce (911, 921), comprenant :
la connexion des cartes à puce (911, 921) avec le terminal de communication (2),
la réception (T1) d'une unité de données protocolaires du terminal de communication (2) par l'interface de module (22),
la détermination (S) par un module d'analyse de protocole (3) d'un type d'instruction à partir de l'unité de données protocolaires reçue **caractérisé par**
la transmission (T2) par un module de commande (4), d'une unité de données protocolaires en fonction du type d'instruction déterminé à une première des cartes à puce (911) et/ou à une seconde des cartes à puce (921), et
la transmission (T4) par le module de commande (4), d'unités de données protocolaires émise par la première carte à puce (911) et/ou par la seconde carte à puce (921) à l'interface de module (22)

8. Procédé de communication selon la revendication 7, **caractérisé par** le stockage de données de configuration dans le terminal de communication (2), lesquelles données de configuration comprennent des indications sur la fonctionnalité de la première carte à puce (911) et sur la fonctionnalité de la seconde carte à puce (921) et par la transmission d'unités de données protocolaires en fonction des données de configuration stockées à la première carte à puce (911) ou à la seconde carte à puce (921).

9. Procédé de communication selon l'une des revendications 7 ou 8, **caractérisé par** la transmission d'unités de données protocolaires à la première carte à puce (911) en fonction de l'unité de données protocolaires réceptionnée par la seconde carte à puce (921).

10. Procédé de communication selon l'une des revendications 7 à 9, **caractérisé par** le stockage de valeurs d'état dans le terminal de communication (2) et par transmission d'unités de données protocolaires en fonction des valeurs d'état stockées à la première carte à puce (911), à la seconde carte à puce (921) ou au terminal de communication (2).

11. Procédé de communication selon l'une des revendications 7 à 9 **caractérisé par** le stockage de valeurs d'état dans le terminal de communication (2) en fonction du type d'instruction d'une unité de données protocolaires qui a été reçue par le terminal de communication (2), en fonction d'une unité de données protocolaires qui a été reçue par la première carte à puce (911) ou par la seconde carte à puce (921 et/ou en fonction du fait que l'unité de données protocolaires a été reçue par la première carte à puce (911), par la seconde carte à puce (921) ou par le terminal de communication (2).

12. Procédé de communication selon l'une des revendications 7 à 9 **caractérisé par** le stockage d'unités de données protocolaires reçues dans le terminal de communication (2) et par transmission d'unités de données protocolaires au terminal de communication (2) en fonction d'unités de données protocolaires stockées qui ont été reçues par la première carte à puce (911) et /ou la seconde carte à puce (921).
